# EUROPÄISCHE PATENTSCHRIFT

(11) **EP 3 294 500 B1**
(45) Veröffentlichungstag und Bekanntmachung des Hinweises auf die Patenterteilung: **29.05.2024**
(21) Anmeldenummer: 16734335.9
(22) Anmeldetag: 30.06.2016
(51) Int. Cl.: B25B 27/02, B23P 19/027, F01D 5/30

(54) **VERFAHREN UND AUSTREIBEVORRICHTUNG ZUM AUSTREIBEN EINER SCHAUFEL**
METHOD AND DRIVE-OUT DEVICE FOR DRIVING OUT A BLADE
PROCÉDÉ ET DISPOSITIF D'EXPULSION D'AUBE

(30) Priorität: 06.08.2015 DE 102015215004
(43) Veröffentlichungstag der Anmeldung: 21.03.2018
(73) Patentinhaber: Siemens Energy Global GmbH & Co. KG, 81739 München (DE)
(72) Erfinder: MIELICH, Kai, 40723 Hilden (DE)
(86) Internationale Anmeldenummer: PCT/EP2016/065289
(87) Internationale Veröffentlichungsnummer: WO 2017/021074

(56) Entgegenhaltungen:
- EP-A1- 1 149 662
- EP-A1- 2 944 760
- EP-A2- 2 110 205
- DE-A1-102008 024 018
- US-A- 4 455 730
- US-A1- 2009 077 957
- US-A1- 2015 128 417

## Beschreibung

Die vorliegende Erfindung betrifft ein Verfahren zum Austreiben einer Schaufel, deren Schaufelfuß in einer länglichen Aufnahmenut einer Radscheibe gehalten ist. Ferner betrifft die vorliegende Erfindung eine Austreibevorrichtung, die zur Durchführung eines solchen Verfahrens ausgelegt ist.

Gas- und Dampfturbinen umfassen Läufer, die im Bereich des Verdichters und der Turbine aus mehreren Radscheiben zusammengesetzt sind, an denen eine Vielzahl von Schaufeln befestigt ist. Die meist schwalbenschwanzartig ausgebildeten Schaufelfüße der Schaufeln sind dabei jeweils in entsprechend geformten und in den Radscheiben ausgebildeten Nuten formschlüssig gehalten. Die Sicherung der Schaufeln gegen ein axiales Verschieben in den entsprechenden Aufnahmenuten wird normalerweise entweder über Sicherungsbleche oder über das Anprägen zweier Sicherungsnasen an den Enden der jeweiligen Aufnahmenut realisiert.

Während des Betriebs sind die Schaufeln hohen Beanspruchungen ausgesetzt und damit einem Verschleiß unterworfen, weshalb sie nach bestimmten Laufzeitintervallen im Rahmen einer Revision ausgetauscht oder repariert werden müssen. Hierzu wird der Läufer in einem ersten Schritt aus dem Gehäuse der Strömungsmaschine ausgebaut. Anschließend wird der Läufer entstapelt, um die einzelnen Radscheiben mit den an diesen gehaltenen Schaufeln voneinander zu trennen. Daraufhin werden die Schaufeln der jeweiligen Radscheiben ausgetrieben. Gemäß einer bekannten Variante wird eine Radscheibe hierzu zunächst waagerecht mit der Nabe auf eine Unterlage gelegt. Anschließend treiben je zwei Werker mithilfe eines Kupferbolzens und entsprechenden Hammerschlägen die Schaufeln nacheinander aus. Ein Werker umfasst dabei den meist mit Putzlappen umwickelten Kupferbolzen und setzt diesen auf den Schaufelfuß auf. Der zweite Werker schlägt mit einem 5 bzw. 10 kg schweren Vorschlaghammer auf den Kupferbolzen. Es sind je nach Schaufelfußgröße und Schaufelhöhe sowie Übermaß in der Passung und Laufzeit der Strömungsmaschine zwischen 20 und 25 Schläge für das Austreiben einer Schaufel erforderlich. Die körperliche Belastung der Werker und die Verletzungsgefahr sind hoch. Auch können Radscheibe und Schaufel bei manuellem Austreiben leicht beschädigt werden. Insbesondere kann es am Schaufelfuß und an den Kontaktflächen der Aufnahmenut zur Riefenbildung kommen. Diese Riefen entstehen, wenn kaltverschweißte Bereiche von Radscheibe und Schaufelfuß gegeneinander unter zu großer Krafteinwirkung verschoben werden. Je nach Stärke des Befunds kann ein zwangsläufiger Austausch der Radscheibe nicht ausgeschlossen werden, was mit hohen Kosten einhergeht. Ein weiterer Nachteil besteht darin, dass der Läufer, an dessen Radscheiben die Schaufeln gehalten sind, vor dem Austreiben der Schaufeln ausgebaut und entstapelt werden muss, was mit einem sehr hohen Zeitaufwand einhergeht. Darüber hinaus ist für den Ausbau und das Entstapeln eines Läufers meist spezielles Gerät erforderlich, das vor Ort häufig nicht vorhanden ist und daher angeliefert werden muss.

Bei einer alternativen bekannten Variante kann das Austreiben der Schaufeln auch unter Verwendung einer Austreibevorrichtung erfolgen. So offenbart beispielsweise die WO 2012/167824 A1 eine Austreibevorrichtung, die ein Gestell, einen Drehtisch, eine an dem Gestell gehaltene Schlageinheit mit einem Austreibestempel und ein auf den Austreibestempel wirkendes Schlagwerk aufweist. Allerdings besteht auch beim Einsatz einer solchen Austreibevorrichtung die Gefahr der zuvor beschriebenen Riefenbildung. Ebenso sind wie beim manuellen Austreiben ein Ausbau und ein Entstapeln des Läufers erforderlich.

Ausgehend von diesem Stand der Technik ist es eine Aufgabe der vorliegenden Erfindung, ein alternatives Verfahren und eine alternative Austreibevorrichtung der eingangs genannten Art zu schaffen.

Zur Lösung dieser Aufgabe schafft die vorliegende Erfindung ein Verfahren zum Austreiben einer Schaufel, deren Schaufelfuß in einer länglichen Aufnahmenut einer an einem gestapelten Läufer angeordneten Radscheibe gehalten ist, wobei das Verfahren die Schritte aufweist: a) Bereitstellen einer Austreibevorrichtung, die einen über einen Hydraulikzylinder betätigten Austreibestempel aufweist; b) Positionieren der Austreibevorrichtung zwischen zwei benachbarten Radscheiben des Läufers derart, dass eine Längsachse des Austreibestempels mit der Aufnahmenut der auszutreibenden Schaufel fluchtet; c) Einstellen eines Maximaldruckes, mit dem der Hydraulikzylinder beaufschlagt werden kann; d) Ausfahren des Austreibestempels, so dass der Austreibestempel mit zunehmendem Druck gegen den Schaufelfuß der auszutreibenden Schaufel drückt; e) Verringern des Druckes, sobald dieser den Maximaldruck erreicht hat; und f) zyklisches Wiederholen der Schritte d) und e), bis die Schaufel aus der Aufnahmenut entfernt ist.

Ein wesentlicher Vorteil des erfindungsgemäßen Verfahrens besteht darin, dass der für das Austreiben einer Schaufel benötigte hydraulische Druck bei der Durchführung der Schritte d) und e) zyklierend bzw. pulsierend bereitgestellt wird. Dies hat den Vorteil, dass die aufzubringende Kraft zum Austreiben einer Schaufel aus der Radscheibe nicht gleichförmig ansteigend bis zum Losbrechen der Verbindung aufgebracht wird, sondern die Losbrechkraft durch pulsierende Kraftaufbringung auf den Schaufelfuß verringert wird, wobei das Austreiben der Schaufel durch diese Schwingungsanregung zusätzlich begünstigt wird. Dies geht mit dem wesentlichen Vorteil einher, dass sich kaltverschweißte Bereiche von Radscheibe und Schaufelfuß wesentlich besser lösen, ohne dass es zu einer Riefenbildung kommt.

Gemäß einer Ausgestaltung der vorliegenden Erfindung ist die Aufnahmenut bezogen auf eine axiale Richtung des Läufers geneigt. Aufgrund der Tatsache, dass in Schritt b) die Längsachse des Austreibestempels fluchtend zur Aufnahmenut positioniert wird, werden auch bei einer solchen Neigung die Kontaktflächen der Aufnahmenut beim Austreiben der Schaufel nicht belastet.

Bevorzugt beträgt der Maximaldruck mindestens 150 bar, besser noch mindestens 200 bar oder mindestens 300 bar.

Gemäß einer Variante des erfindungsgemäßen Verfahrens wird in Schritt e) der Druck verringert, bis dieser einen voreingestellten Minimaldruck erreicht hat, woraufhin der Druck im sich anschließenden Schritt d) erneut erhöht wird. Bevorzugt liegt der Maximaldruck dabei mindestens 80 bar oberhalb des Minimaldruckes, besser noch mindestens 100 bar.

Gemäß einer weiteren Variante des erfindungsgemäßen Verfahrens wird in Schritt e) der Druck für eine vorbestimmte Zeitdauer verringert, woraufhin der Druck im sich anschließenden Schritt d) erneut erhöht wird.

Vorteilhaft werden die Schritte d) und e) mit einer Taktzeit im Bereich von 2 Hz bis 10 Hz wiederholt. Dank einer solchen Taktzeit lassen sich Schaufeln innerhalb einer sehr kurzen Zeitdauer austreiben.

Bevorzugt wird das Verfahren in einem Zustand durchgeführt, in dem der gestapelte Läufer in einem Gehäuse einer Strömungsmaschine aufgenommen ist, wodurch Aufwand und Zeit für das Austreiben von Schaufeln deutlich reduziert werden.

Zur Lösung der eingangs genannten Aufgabe schafft die vorliegende Erfindung ferner eine Austreibevorrichtung, zur Durchführung eines erfindungsgemäßen Verfahrens, mit einer elektrohydraulischen Pumpe, die an einen Öltank angeschlossen ist, einem über ein schaltbares Ventil mit der Pumpe verbundenen Hydraulikzylinder, einem Austreibestempel, der derart mit einer Kolbenstange des Hydraulikzylinders wirkverbunden ist, dass er von der Kolbenstange in Richtung seiner Längsachse bewegt wird, sobald der Hydraulikzylinder von der Pumpe mit einem Druck beaufschlagt wird, und einer Pumpensteuerung, die derart eingerichtet ist, dass sie das Ventil zur Verringerung des Druckes schaltet, sobald der Druck einen voreingestellten Maximaldruck erreicht hat, und dass sie das Ventil zur Erhöhung des Druckes schaltet, sobald der Druck einen voreingestellten Minimaldruck erreicht hat, oder sobald eine vorbestimmte Zeitdauer verstrichen ist.

Bevorzugt ist der Hydraulikzylinder an einem Gehäuse befestigt, in das die Kolbenstange ragt und aus dem der Austreibestempel vorsteht, ausgefahren und wieder eingefahren werden kann.

Vorteilhaft definieren die Längsachse des Austreibestempels (15) und eine Gehäusewand, von welcher der Austreibestempel (15), einen Winkel, der von 90° verschieden ist. Mit anderen Worten steht der Austreibestempel schräg von dem Gehäuse vor, und zwar entsprechend dem Winkel der Schaufelnut zur Rotorachse, in der die auszutreibende Schaufel gehalten ist.

Vorteilhaft ist in dem Gehäuse eine Mechanik angeordnet, welche die geradlinige Bewegung der Kolbenstange in eine geradlinige Bewegung des Austreibestempels überführt, wobei die Bewegungsrichtungen der Kolbenstange und des Austreibestempels verschieden sind. Dies ist dahingehend von Vorteil, dass die Austreibevorrichtung in Bewegungsrichtung des Austreibestempels sehr schmal gebaut werden kann, so dass sich die erfindungsgemäße Austreibevorrichtung zwischen zwei Radscheiben eines gestapelten Läufers positionieren lässt.

Bevorzugt umfasst die Mechanik einen ersten Körper, der an der Kolbenstange befestigt ist und eine erste schräge Fläche definiert, eine zweiten Körper, der ortsfest innerhalb des Gehäuses befestigt ist und eine zweite schräge Fläche definiert, und einen fest mit dem Austreibestempel verbundenen oder diesen definierenden dritten Körper, der eine dritte und eine vierte schräge Fläche definiert, wobei die dritte schräge Fläche an der ersten schrägen Fläche und die vierte schräge Fläche an der zweiten schrägen Fläche anliegt und geführt ist. Auf diese Weise wird ein sehr einfacher Aufbau erzielt.

Weitere Merkmale und Vorteile der vorliegenden Erfindung werden anhand der nachfolgenden Beschreibung einer Austreibevorrichtung gemäß einer Ausführungsform der vorliegenden Erfindung unter Bezugnahme auf die beiliegende Zeichnung deutlich. Darin ist
- Figur 1: eine schematische Ansicht einer Austreibevorrichtung gemäß einer Ausführungsform der vorliegenden Erfindung;

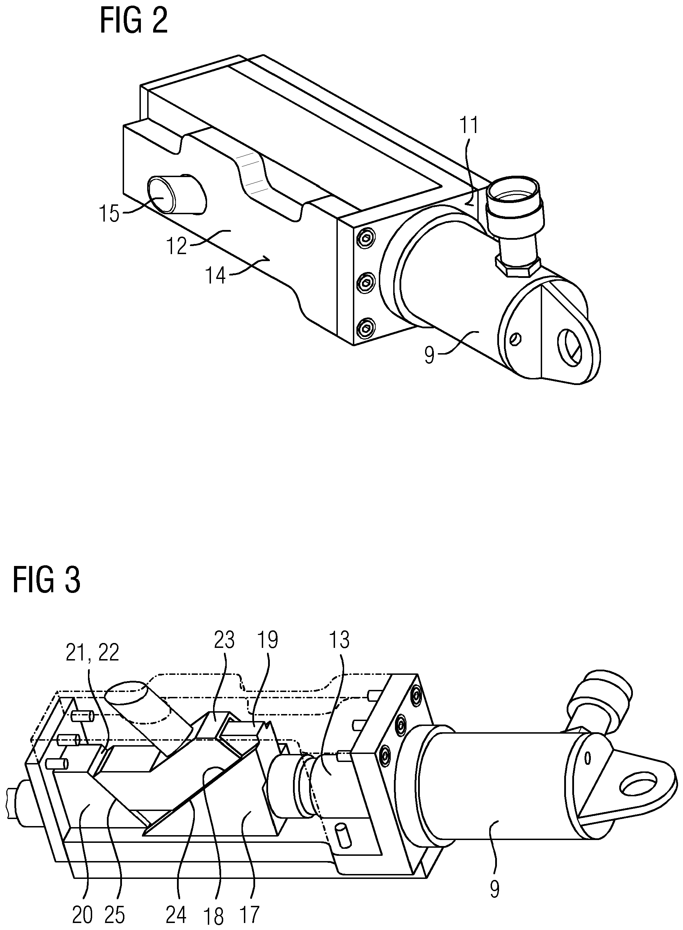

- Figur 2: eine perspektivische Ansicht eines in Figur 1 gezeigten Gehäuses, an dem ein Hydraulikzylinder angeordnet ist und aus dem ein Austreibestempel vorsteht;
- Figur 3: eine weitere perspektivische Ansicht des in Figur 2 gezeigten Gehäuses, wobei zur besseren Darstellung eine Gehäuseabdeckung des Gehäuses nicht dargestellt ist;
- Figur 4: eine perspektivische Ansicht des in den Figuren 2 und 3 dargestellten Gehäuses in einem Zustand, in dem dieses zum Austreiben einer Schaufel an einer Radscheibe befestigt ist; und
- Figur 5: ein Diagramm, das den schematischen Verlauf eines Druckes zeigt, mit dem der Hydraulikzylinder von einer in Figur 1 dargestellten hydraulischen Pumpe zum Austreiben der in Figur 4 gezeigten Schaufel beaufschlagt wird.

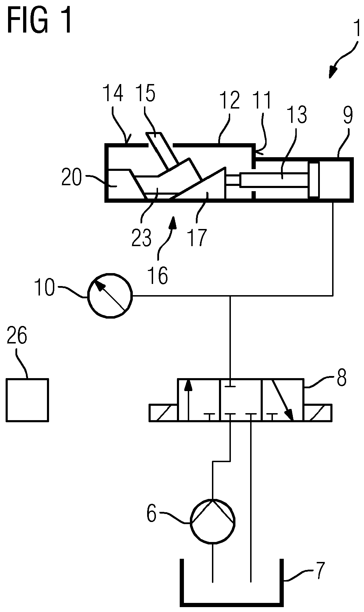

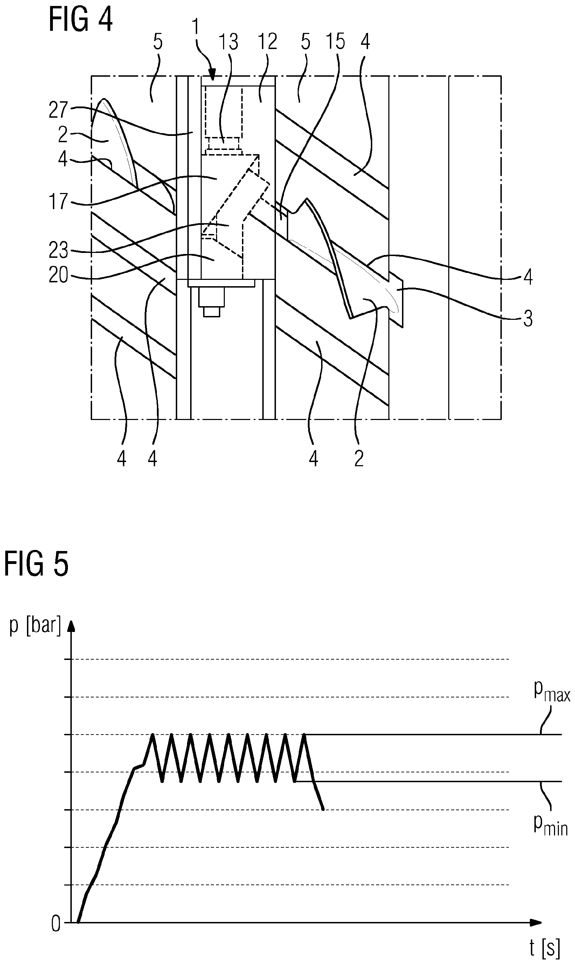

Figur 1 zeigt eine Austreibevorrichtung 1 gemäß einer Ausführungsform der vorliegenden Erfindung, die zum Austreiben einer Schaufel 2 dient, deren Schaufelfuß 3 in einer länglichen Aufnahmenut 4 einer Radscheibe 5 gehalten ist, wie es unter Bezugnahme auf die Figuren 4 und 5 nachfolgend noch näher erläutert wird. Die Austreibevorrichtung 1 umfasst eine elektrohydraulische Pumpe 6, die an einen Öltank 7 angeschlossen ist, der vorliegend ein Tankvolumen von 20 dm³ aufweist. Die Pumpe 6 weist einen maximalen Betriebsdruck von 700 bar mit einstellbarem Druckbegrenzungsventil, ein Fördervolumen von 0,55 l/min, eine Motorleistung von 0,75 kW und eine Motorspannung von 230 V auf, wobei grundsätzlich auch andere geeignete Pumpen mit ähnlichen Kennzahlen verwendet werden können. Die Pumpe 6 ist über ein schaltbares Ventil 8, vorliegend ein 3/3 Wege Elektromagnetventil, das die Funktionen Ausfahren, Halt und Einfahren realisiert, an einen Hydraulikzylinder 9 angeschlossen. Zwischen dem Ventil 8 und dem Hydraulikzylinder 9 ist ein Druckmessgerät 10 angeordnet, das den am Hydraulikzylinder 9 anliegenden Druck erfasst. Der Hydraulikzylinder 9 ist derart an der Stirnseite 11 eines länglichen, im Wesentlichen rechteckig ausgebildeten Gehäuses 12 befestigt, dass seine Kolbenstange 13 ins Innere des Gehäuses 12 ragt. Mit der Kolbenstange 13 ist ein schräg aus einer Seitenfläche 14 des Gehäuses 12 ragender Austreibestempel 15 über eine innerhalb des Gehäuses 12 angeordnete Mechanik 16 verbunden. Die Mechanik 16 umfasst einen ersten Körper 17, der an der Kolbenstange 13 befestigt ist und eine erste schräge Fläche 18 definiert, an der eine erste Führung 19 ausgebildet ist. Ferner umfasst die Mechanik 16 einen zweiten Körper 20, der ortsfest innerhalb des Gehäuses 12 befestigt ist und eine zweite schräge Fläche 21 definiert, die sich senkrecht zu der ersten schrägen Fläche 18 des ersten Körpers 17 erstreckt und mit einer zweiten Führung 22 versehen ist. Darüber hinaus umfasst die Mechanik 16 einen dritten Körper 23, der fest mit dem Austreibestempel 15 verbunden oder integral mit diesem ausgebildet ist. Der dritte Körper 23 weist eine dritte schräge Fläche 24 und eine vierte schräge Fläche 25 auf, wobei die dritte schräge Fläche 24 an der ersten schrägen Fläche 18 und die vierte schräge Fläche 25 an der zweiten schrägen Fläche 21 anliegt und entlang der jeweiligen Führung 19, 22 geführt ist. Ferner umfasst die Austreibevorrichtung 1 eine Pumpensteuerung 26.

Zum Austreiben einer Schaufel 2 aus der zugehörigen Aufnahmenut 4 wird die Austreibevorrichtung 1 bzw. deren Gehäuse 12 zunächst zwischen zwei Radscheiben 5 eines gestapelten und in einer Strömungsmaschine angeordneten Läufers derart positioniert, dass die Längsachse des Austreibestempels 15 mit der Aufnahmenut 4 fluchtet. Vorliegend ist zwischen dem Gehäuse 12 der Austreibevorrichtung 1 und derjenigen Radscheibe 5, aus der keine Schaufel 2 ausgetrieben werden soll, zusätzlich eine Ausgleichsplatte 27 eingelegt, um einen zwischen dem Gehäuse 12 und der Radscheibe 5 verbleibenden Spalt zu füllen. In einem weiteren Schritt werden ein Minimaldruck pₘᵢₙ und ein Maximaldruck pₘₐₓ an der Pumpensteuerung 26 eingestellt. Der Minimaldruck pₘᵢₙ beträgt vorliegend 380 bar und der Maximaldruck pₘₐₓ 500 bar, wobei grundsätzlich auch abweichende Druckwerte eingestellt werden können. In einem weiteren Schritt wird der Austreibestempel 15 ausgefahren und mit zunehmenden Druck gegen den Schaufelfuß 3 gedrückt, indem die Pumpe 6 und der Hydraulikzylinder 9 durch entsprechende Betätigung des Ventils 8 miteinander verbunden werden. Der Druck wird weiter erhöht, bis das Druckmessgerät 10 den maximalen Druck pₘₐₓ erfasst. Sollte die Schaufel in diesem Zustand noch nicht ausgetrieben sein, so wird der Druck wieder verringert, indem die Pumpensteuerung 26 das Ventil 8 entsprechend schaltet, bis der Druck den voreingestellten Minimaldruck pₘᵢₙ erreicht, was wiederum von dem Druckmessgerät 10 detektiert wird. Anschließend wird der Druck erneut auf den Maximaldruck pₘₐₓ erhöht, wie es in Figur 5 schematisch dargestellt ist. Dieser Zyklus wird mit einer Taktzeit im Bereich von 2 Hz bis 10 Hz wiederholt, bis der Schaufelfuß 3 vollständig aus der Aufnahmenut 4 der Radscheibe 5 ausgetrieben ist. Anschließend wird das Ventil 8 in seine mittlere Stellung überführt.

Aufgrund der Tatsache, dass der für das Austreiben einer Schaufel 2 benötigte hydraulische Druck pulsierend bereitgestellt wird, und dass die von dem Austreibestempel 15 auf den Schaufelfuß 3 ausgeübte Kraft in Erstreckungsrichtung der Aufnahmenut 4 wirkt, ist zum Losbrechen der Verbindung zwischen Schaufel 2 und Radscheibe 5 nur eine geringe Kraft erforderlich. Dies geht mit dem wesentlichen Vorteil einher, dass sich kaltverschweißte Bereiche von Radscheibe und Schaufelfuß gut lösen, ohne dass es zu einer Riefenbildung kommt. Ein weiterer Vorteil besteht darin, dass sich das Verfahren aufgrund des klein bauenden Gehäuses 12 bei gestapeltem Läufer und in der Strömungsmaschine montiertem Läufer durchführen lässt, also in situ, was mit einer großen Zeit- und Kostenersparnis einhergeht.

Es sei darauf hingewiesen, dass gemäß einer Variante des erfindungsgemäßen Austreibeverfahrens das Ventil 8 nach Erreichen des Maximaldruckes pₘₐₓ auch verringert und dann nach Verstreichen einer vorbestimmten Zeitdauer Δt wieder erhöht werden kann, also zeitanhängig und nicht in Abhängigkeit von einem Minimaldruck pₘᵢₙ.

Obwohl die Erfindung im Detail durch das bevorzugte Ausführungsbeispiel näher illustriert und beschrieben wurde, so ist die Erfindung nicht durch die offenbarten Beispiele eingeschränkt.

## Patentansprüche

1. Verfahren zum Austreiben einer Schaufel (2),
deren Schaufelfuß (3) in einer länglichen Aufnahmenut (4) einer an einem gestapelten Läufer angeordneten Radscheibe (5) gehalten ist,
wobei das Verfahren die Schritte aufweist:
a) Bereitstellen einer Austreibevorrichtung (1), die einen über einen Hydraulikzylinder (9) betätigten Austreibestempel (15) aufweist;
b) Positionieren der Austreibevorrichtung (1) zwischen zwei benachbarten Radscheiben (5) des Läufers derart, dass eine Längsachse des Austreibestempels (15) mit der Aufnahmenut (4) der auszutreibenden Schaufel (2) fluchtet;
c) Einstellen eines Maximaldruckes (pₘₐₓ), mit dem der Hydraulikzylinder (9) beaufschlagt werden kann;
d) Ausfahren des Austreibestempels (15), so dass der Austreibestempel (15) mit zunehmendem Druck gegen den Schaufelfuß (3) der auszutreibenden Schaufel (2) drückt,
e) Verringern des Druckes, sobald dieser den Maximaldruck (Pmax) erreicht hat;
f) zyklisches Wiederholen der Schritte d) und e), bis die Schaufel (2) aus der Aufnahmenut (3) entfernt ist.

2. Verfahren nach Anspruch 1,
**dadurch gekennzeichnet, dass**
die Aufnahmenut (4) bezogen auf eine axiale Richtung des Läufers geneigt ist.

3. Verfahren nach Anspruch 1 oder 2,
**dadurch gekennzeichnet, dass**
der Maximaldruck (pₘₐₓ) mindestens 150 bar beträgt, besser noch mindestens 200 bar oder mindestens 300 bar.

4. Verfahren nach einem der vorhergehenden Ansprüche,
**dadurch gekennzeichnet, dass**
in Schritt e) der Druck verringert wird, bis dieser einen voreingestellten Minimaldruck (pₘᵢₙ) erreicht hat, woraufhin der Druck im sich anschließenden Schritt d) erneut erhöht wird.

5. Verfahren nach Anspruch 4,
**dadurch gekennzeichnet, dass**
der Maximaldruck (pₘₐₓ) mindestens 80 bar oberhalb des Minimaldruckes (pₘᵢₙ) liegt, besser noch mindestens 100 bar.

6. Verfahren nach einem der Ansprüche 1 bis 3,
**dadurch gekennzeichnet, dass**
in Schritt e) der Druck für eine vorbestimmte Zeitdauer (Δt) verringert wird, woraufhin der Druck im sich anschließenden Schritt d) erneut erhöht wird.

7. Verfahren nach einem der vorhergehenden Ansprüche,
**dadurch gekennzeichnet, dass**
die Schritte d) und e) mit einer Taktzeit im Bereich von 2 Hz bis 10 Hz wiederholt werden.

8. Verfahren nach einem der vorhergehenden Ansprüche,
**dadurch gekennzeichnet, dass**
das Verfahren in einem Zustand durchgeführt wird, in dem der gestapelte Läufer in einem Gehäuse einer Strömungsmaschine aufgenommen ist.

9. Austreibevorrichtung (1), zur Durchführung eines Verfahrens nach einem der vorhergehenden Ansprüche,
mit einer elektrohydraulischen Pumpe (6), die an einen Öltank (7) angeschlossen ist, einem über ein schaltbares Ventil (8) mit der Pumpe (6) verbundenen Hydraulikzylinder (9), einem Austreibestempel (15), der derart mit einer Kolbenstange (13) des Hydraulikzylinders (9) wirkverbunden ist, dass er von der Kolbenstange (13) in Richtung seiner Längsachse bewegt wird, sobald der Hydraulikzylinder (9) von der Pumpe (6) mit einem Druck beaufschlagt wird, und einer Pumpensteuerung (26), die derart eingerichtet ist, dass sie das Ventil (8) zur Verringerung des Druckes schaltet, sobald der Druck einen voreingestellten Maximaldruck (pₘₐₓ) erreicht hat, und dass sie das Ventil (8) zur Erhöhung des Druckes schaltet, sobald der Druck einen voreingestellten Minimaldruck (pₘᵢₙ) erreicht hat, oder sobald eine vorbestimmte Zeitdauer (Δt) verstrichen ist.

10. Austreibevorrichtung (1) nach Anspruch 9,
**dadurch gekennzeichnet, dass**
der Hydraulikzylinder (9) an einem Gehäuse (12) befestigt ist, in das die Kolbenstange (13) ragt und aus dem der Austreibestempel (15) vorsteht.

11. Austreibevorrichtung (1) nach Anspruch 10,
**dadurch gekennzeichnet, dass**
die Längsachse des Austreibestempels (15) und eine Gehäusewand, von welcher der Austreibestempel (15) vorsteht, einen Winkel definieren, der von 90° verschieden ist.

12. Austreibevorrichtung (1) nach Anspruch 10 oder 11,
**dadurch gekennzeichnet, dass**
in dem Gehäuse (12) eine Mechanik (16) angeordnet ist, welche die geradlinige Bewegung der Kolbenstange (13) in eine geradlinige Bewegung des Austreibestempels (15) überführt, wobei die Bewegungsrichtungen verschieden sind.

13. Austreibevorrichtung (1) nach Anspruch 12,
**dadurch gekennzeichnet, dass**
die Mechanik (16) einen ersten Körper (17), der an der Kolbenstange (13) befestigt ist und eine erste schräge Fläche (18) definiert, einen zweiten Körper (20), der ortsfest innerhalb des Gehäuses (12) befestigt ist und eine zweite schräge Fläche (21) definiert, und einen fest mit dem Austreibestempel (15) verbundenen oder diesen definierenden dritten Körper (23) umfasst, der eine dritte und eine vierte schräge Fläche (24, 25) definiert,
wobei die dritte schräge Fläche (24) an der ersten schrägen Fläche (18) und die vierte schräge Fläche (25) an der zweiten schrägen Fläche (21) anliegt und geführt ist.

## Claims

1. Method for driving out a blade (2), the blade root (3) of which is held in an elongate receiving groove (4) of a wheel disk (5) arranged on a stacked rotor,
the method comprising the steps of:
a) providing a drive-out device (1), which has a driving-out ram (15) actuated by way of a hydraulic cylinder (9);
b) positioning the drive-out device (1) between two adjacent wheel disks (5) of the rotor in such a way that a longitudinal axis of the driving-out ram (15) is in line with the receiving groove (4) of the blade (2) to be driven out;
c) setting a maximum pressure (pₘₐₓ) to which the hydraulic cylinder (9) can be subjected;
d) extending the driving-out ram (15), so that the driving-out ram (15) presses with increasing pressure against the blade root (3) of the blade (2) to be driven out;
e) reducing the pressure as soon as it has reached the maximum pressure (pₘₐₓ) ;
f) cyclically repeating steps d) and e) until the blade (2) has been removed from the receiving groove (3).

2. Method according to Claim 1,
**characterized in that**
the receiving groove (4) is inclined with respect to an axial direction of the rotor.

3. Method according to Claim 1 or 2,
**characterized in that**
the maximum pressure (pₘₐₓ) is at least 150 bar, better still at least 200 bar or at least 300 bar.

4. Method according to one of the preceding claims,
**characterized in that**
in step e) the pressure is reduced until it has reached a preset minimum pressure (pₘᵢₙ), whereupon the pressure is increased once again in the subsequent step d).

5. Method according to Claim 4,
**characterized in that**
the maximum pressure (pₘₐₓ) is at least 80 bar above the minimum pressure (pₘᵢₙ), better still at least 100 bar.

6. Method according to one of Claims 1 to 3,
**characterized in that**
in step e) the pressure is reduced for a predetermined time period (Δt), after which the pressure is increased again in the subsequent step d).

7. Method according to one of the preceding claims,
**characterized in that**
steps d) and e) are repeated with a cycle time in the range of 2 Hz to 10 Hz.

8. Method according to one of the preceding claims,
**characterized in that**
the method is carried out in a state in which the stacked rotor is accommodated in a housing of a turbo machine.

9. Drive-out device (1),
for carrying out a method according to one of the preceding claims,
with an electrohydraulic pump (6), which is connected to an oil tank (7), a hydraulic cylinder (9), which is connected to the pump (6) by way of a switchable valve (8), a driving-out ram (15), which is operatively connected to a piston rod (13) of the hydraulic cylinder (9) in such a way that it is moved by the piston rod (13) in the direction of its longitudinal axis as soon as the hydraulic cylinder (9) is subjected to a pressure by the pump (6), and a pump controller (26), which is designed in such a way that it switches the valve (8) to reduce the pressure as soon as the pressure has reached a preset maximum pressure (pₘₐₓ), and in such a way that it switches the valve (8) to increase the pressure as soon as the pressure has reached a preset minimum pressure (pₘᵢₙ), or as soon as a predetermined time period (Δt) has elapsed.

10. Drive-out device (1) according to Claim 9,
**characterized in that**
the hydraulic cylinder (9) is fastened to a housing (12) into which the piston rod (13) protrudes and from which the driving-out ram (15) projects.

11. Drive-out device (1) according to Claim 10,
**characterized in that**
the longitudinal axis of the driving-out ram (15) and a housing wall from which the driving-out ram (15) projects define an angle that is different from 90°.

12. Drive-out device (1) according to Claim 10 or 11,
**characterized in that**
arranged in the housing (12) is a mechanism (16) which transforms the straight movement of the piston rod (13) into a straight movement of the driving-out ram (15), the directions of movement being different.

13. Drive-out device (1) according to Claim 12,
**characterized in that**
the mechanism (16) comprises a first body (17), which is fastened to the piston rod (13) and defines a first sloping surface (18), a second body (20), which is fastened fixedly within the housing (12) and defines a second sloping surface (21), and a third body (23), which is fixedly connected to the driving-out ram (15) or defines it and defines a third and a fourth sloping surface (24, 25),
the third sloping surface (24) lying against the first sloping surface (18) and the fourth sloping surface (25) lying against the second sloping surface (21) and being guided.

## Revendications

1. Procédé pour expulser une aube (2), dont l'emplanture (3) d'aube est retenue dans une rainure (4) longitudinale de réception d'un disque (5) de roue monté sur un rotor empilé, dans lequel le procédé comporte les stades :
a) on se procure un dispositif (1) d'expulsion, qui a un poinçon (15) d'expulsion actionné par un vérin (9) hydraulique ;
b) on met le dispositif (1) d'expulsion en position entre deux disques (5) de roue voisins du rotor, de manière à ce qu'un axe longitudinal du poinçon (15) d'expulsion soit aligné avec la rainure (4) de réception de l'aube (2) à expulser ;
c) on règle une pression (pₘₐₓ) maximum, à laquelle le vérin (9) hydraulique peut être soumis ;
d) on fait sortir le poinçon (15) d'expulsion, de manière à ce que le poinçon (15) d'expulsion appuie, avec une pression croissante, sur l'emplanture (3) d'aube de l'aube (2) à expulser ;
e) on diminue la pression, dès que celle-ci a atteint la pression (pₘₐₓ) maximum ;
f) on répète cycliquement les stades d) et e), jusqu'à ce que l'aube (2) soit retirée de la rainure (3) de réception.

2. Procédé suivant la revendication 1,
**caractérisé en ce que**
la rainure (4) de réception est inclinée par rapport à une direction axiale du rotor.

3. Procédé suivant la revendication 1 ou 2,
**caractérisé en ce que**
la pression (pₘₐₓ) maximum est d'au moins 150 bar, mieux encore d'au moins 200 bar ou d'au moins 300 bar.

4. Procédé suivant l'une des revendications précédentes,
**caractérisé en ce que**
au stade e), on diminue la pression jusqu'à atteindre une pression (pₘᵢₙ) minimum réglée à l'avance, puis on élève à nouveau la pression dans le stade d) venant ensuite.

5. Procédé suivant la revendication 4,
**caractérisé en ce que**
la pression (pₘₐₓ) maximum est supérieure d'au moins 80 bar à la pression (pₘᵢₙ) minimum, mieux encore d'au moins 100 bar.

6. Procédé suivant l'une des revendications 1 à 3,
**caractérisé en ce que**
au stade e), on diminue la pression pendant une durée (Δt) déterminée à l'avance, puis on élève à nouveau la pression dans le stade d) venant ensuite.

7. Procédé suivant l'une des revendications précédentes,
**caractérisé en ce que**
l'on répète les stades d) et e) à une cadence de l'ordre de 2 Hz à 10 Hz.

8. Procédé suivant l'une des revendications précédentes,
**caractérisé en ce que**
l'on effectue le procédé dans un état, dans lequel le rotor empilé est reçu dans une enveloppe d'une turbomachine.

9. Dispositif (1) d'expulsion,
pour effectuer un procédé suivant l'une des revendications précédentes,
comprenant une pompe (6) électrohydraulique, qui est raccordée à un réservoir (7) d'huile, un vérin (9) hydraulique relié à la pompe (6) par une soupape (8) commutable, un poinçon (15) d'expulsion, qui est en relation d'action avec une tige (13) de piston du vérin (9) hydraulique, de manière à être déplacé dans la direction de son axe longitudinal par la tige (13) de piston, dès que le vérin (9) hydraulique est alimenté en pression par la pompe (6), et une commande (26) de pompe, qui est agencée de manière à commuter la soupape (8) pour diminuer la pression, dès que la pression a atteint une pression (pₘₐₓ) maximum réglée à l'avance, et en ce que la soupape (8) commute pour élever la pression, dès que la pression a atteint une pression (pₘᵢₙ) minimum réglée à l'avance ou dès qu'une durée (Δt) déterminée à l'avance s'est écoulée.

10. Dispositif (1) d'expulsion suivant la revendication 9,
**caractérisé en ce que**
le vérin (9) hydraulique est fixé à une enveloppe (12), dans laquelle la tige (13) de piston pénètre et de laquelle le poinçon (15) d'expulsion fait saillie.

11. Dispositif (1) d'expulsion suivant la revendication 10,
**caractérisé en ce que**
l'axe longitudinal du poinçon (15) d'expulsion et une paroi de l'enveloppe, de laquelle le poinçon (15) d'expulsion fait saillie, définissent un angle, qui est différent de 90°.

12. Dispositif (1) d'expulsion suivant la revendication 10 ou 11,
**caractérisé en ce que**,
dans l'enveloppe (12) est disposé un mécanisme (16), qui transforme le déplacement rectiligne de la tige (13) de piston en un déplacement rectiligne du poinçon (15) d'expulsion, les directions de déplacement étant différentes.

13. Dispositif (1) d'expulsion suivant la revendication 12, **caractérisé en ce que**
le mécanisme (16) comprend une première pièce (17), qui est fixée à la tige (13) du piston et définit une première surface (18) inclinée, une deuxième pièce (20), qui est fixée fixe en emplacement dans l'enveloppe (12) et qui définit une deuxième surface (21) inclinée, et une troisième pièce (23), reliée fixement au poinçon (15) d'expulsion ou le définissant, qui définit une troisième et une quatrième surfaces (24, 25) inclinée,
dans lequel la troisième surface (24) inclinée s'applique et est guidée sur la première surface (18) inclinée et la quatrième surface (25) inclinée sur la deuxième surface (21) inclinée.
